# EUROPÄISCHE PATENTSCHRIFT

(11) **EP 3 873 715 B1**
(45) Veröffentlichungstag und Bekanntmachung des Hinweises auf die Patenterteilung: **12.10.2022**
(21) Anmeldenummer: 19795153.6
(22) Anmeldetag: 23.10.2019
(51) Int. Cl.: B29C 45/76, B29C 45/78, B29C 45/17, B29L 31/56

(54) **VERFAHREN UND VORRICHTUNG ZUM ERFASSEN EINES GEOMETRISCHEN MERKMALS VON FORMTEILEN**
METHOD AND DEVICE FOR DETECTING A GEOMETRIC FEATURE OF MOLDED PARTS
PROCÉDÉ ET DISPOSITIF DE DÉTECTION D'UNE CARACTÉRISTIQUE GÉOMÉTRIQUE DE PIÈCES MOULÉES

(30) Priorität: 29.10.2018 DE 102018126966
(43) Veröffentlichungstag der Anmeldung: 08.09.2021
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); SCHÖNHOFF, Klaus, 52146 Würselen (DE)
(74) Vertreter: Kohlmann, Kai
(86) Internationale Anmeldenummer: PCT/EP2019/078837
(87) Internationale Veröffentlichungsnummer: WO 2020/089005

(56) Entgegenhaltungen:
- DE-A1-102009 001 682
- US-A1- 2015 321 404
- US-A1- 2016 097 633

## Beschreibung

Die Erfindung betrifft ein Verfahren und eine Vorrichtung zum Erfassen eines geometrischen Merkmals von übereinstimmenden Formteilen in einem optischen Inspektionssystem.

Die Formteile werden im Wege des Gießens mit Hilfe einer Gießmaschine hergestellt. Das Gießen ist ein Urformverfahren, bei dem Flüssigkeiten, Pasten oder Brei in die Formhohlräume (Kavitäten) eines Formwerkzeuges gefüllt werden und dort erstarren. Neben dem Urformen aus dem flüssigen Zustand von Metallen ist insbesondere das Urformen aus dem plastischen Zustand, insbesondere das Spritzgießen von Kunststoffen von besonderer Bedeutung.

In einer Spritzgießmaschine wird thermoplastischer Kunststoff plastifiziert und unter hohem Druck in die Kavitäten des Formwerkzeuges gedrückt. Der plastifizierte Kunststoff weist typischerweise eine Temperatur von 200° - 300° Celsius auf und kühlt in den Kavitäten des Formwerkzeuges ab, bis eine zum Entformen hinreichende Steifigkeit der Formteile erreicht ist. Zum Entformen der Formteile aus den Kavitäten wird die Auswerferseite der Schließeinheit geöffnet und die Formteile werden beispielsweise durch in die Kavität hinein dringende Stifte entformt und ausgeworfen. Beim Entformen der Formteile aus dem Formwerkzeug sind diese noch nicht vollständig abgekühlt, sondern weisen eine gegenüber der Umgebungstemperatur im Bereich der Gießmaschine erhöhte Temperatur auf. Unmittelbar nach dem Entformen schließt sich das Formwerkzeug wieder und der nächste Spritzgießzyklus beginnt.

Geometrische Merkmale, wie die Formteilmaße sowie Formabweichungen der Formteile, stellen ein wesentliches Qualitätsmerkmal dar. Bei massenhaft im Wege des Spritzgießens hergestellten übereinstimmenden Formteilen ist eine fortlaufende und rasche Erfassung der geometrischen Merkmale mit Hilfe eines optischen Inspektionssystems von besonderer Bedeutung, um Schwankungen der Formteilmaße sowie Formänderungen im laufenden Herstellungsprozess zeitnah festzustellen und bei Änderungen außerhalb eines Toleranzbereichs entsprechende Gegenmaßnahmen in dem Herstellungsprozess der Formteile zu ergreifen.

Um Änderungen geometrischer Merkmale der hergestellten Formteile in einem Inspektionssystem zu erfassen, werden die entformten Formteile mit einer Transporteinrichtung noch während des Abkühlens zu einem Inspektionssystem transportiert. Dort wird im Durchlaufverfahren mindestens ein geometrisches Merkmal jedes Formteils in dem Inspektionssystem mit Hilfe mindestens einer digitalen Kamera erfasst. Bei der Erfassung ist jedoch problematisch, dass sich die geometrischen Merkmale der Formteile in den ersten Minuten nach der Entformung besonders stark ändern. Hinzu kommt, dass die Dauer des Transports der entformten Formteile zu dem Inspektionssystem zumindest teilweise unterschiedlich lang ist. Der Grund hierfür liegt in der Konstruktion der mehrere Förderer umfassenden Fördereinrichtung zum Transportieren der entformten Formteile zu dem Inspektionssystem. Die Fördereinrichtung weist üblicherweise neben einem Ausförderband, auch als Cross Conveyor bezeichnet, auf das die entformten Formteile fallen, einen Kühlsteigförderer, auch als Cooling Conveyor bezeichnet, auf. Schließlich ist dem Kühlsteigförderer vielfach ein Sortierförderer nachgeordnet. Zwischen den Förderern können Zwischenspeicher für die Formteile angeordnet sein, in denen die Formteile ungeordnet liegen und dem Weitertransport zugeführt werden. Infolgedessen ist die Dauer des Transports der entformten Formteile zu dem Inspektionssystem zumindest teilweise unterschiedlich lang. Die Werte der geometrischen Merkmale weisen eine recht starke Streuung auf und sind für eine Nachregelung des Herstellungsprozesses der Formteile nicht ohne weiteres geeignet.

Die DE 10 2009 001 682 A1 offenbart ein Verfahren zur Steuerung eines Spritzgießprozesses, bei dem den hergestellten Spritzgussteilen Stichproben entnommen werden. Die Stichproben werden vermessen, indem kontinuierlich oder in vorgegebenen Intervallen Bilder des Spritzgussteils aufgenommen werden. Aus den Bildern werden Maße des Bauteils bestimmt. Neben der Aufnahme von Bildern wird gleichzeitig auch die Temperatur des Bauteils jeweils zum Zeitpunkt der Aufnahme eines Bildes erfasst. Aus den so erfassten Daten, d.h. den gemessenen Temperaturwerten und den Maßänderungen werden zeit-und temperaturabhängige Schwindungskurven erstellt. Die aus den Schwindungskurven extrapolierten Bauteilmaße werden zur Anpassung der Spritzgießparameter verwendet.

Die US 2015/321404 A1 offenbart eine Formsystem zum Herstellen von Formteilen mit einem Bildverarbeitungssystem, welches mit Hilfe mindestens einer Kamera einen Parameter eines Formteils erkennt und mit dem der Betrieb des Formsystems gesteuert werden kann. Der Parameter kann beispielsweise eine oder mehrere ausgewählte Dimension(en) des Formteils oder eine Temperatur des Formteils sein. Die Parameter können an verschiedenen Stellen innerhalb des Formsystems geprüft werden. Die Kamera(s) des Bildverarbeitungssystems können positioniert sein, um das Formteil in der Form selbst oder an anderer Stelle in einer Konditionierungsvorrichtung nach dem Formen zu inspizieren. Zum Beispiel kann das Bildverarbeitungssystem so angeordnet werden, dass es die Formteile inspiziert, während sie sich auf dem Förderer der Konditionierungsvorrichtung befinden.

Ausgehend von diesem Stand der Technik liegt der Erfindung die Aufgabe zugrunde, ein Verfahren und eine Vorrichtung zum Erfassen eines geometrischen Merkmals von übereinstimmenden Formteilen in einem Inspektionssystem zu schaffen, das unabhängig von der Dauer des Transports der entformten Formteile zu dem Inspektionssystem zuverlässige Informationen über die erfassten geometrischen Merkmale der übereinstimmenden Formteile liefert.

Diese Aufgabe wird durch ein Verfahren mit den Merkmalen des Anspruchs 1 sowie eine Vorrichtung mit den Merkmalen des Anspruchs 13 gelöst.

Die Erfindung berücksichtigt die unterschiedlichen Stadien der Abkühlung aufgrund der unterschiedlich langen Transportdauer der einzelnen entformten Formteile zu dem Inspektionssystem, indem in dem Inspektionssystem nicht nur das mindestens eine geometrische Merkmal erfasst, sondern außerdem die Temperatur jedes Formteils berührungslos gemessen wird, während die Formteile das Inspektionssystem durchlaufen. Die erfassten geometrischen Merkmale werden mit Hilfe einer Kalibrierfunktion unter Berücksichtigung der gemessenen Temperaturen korrigiert. Durch die Temperaturnormierung der erfassten geometrischen Merkmale lassen sich die geometrischen Merkmale der Formteile beispielsweise nach vollständiger Abkühlung auf die Umgebungstemperatur voraussagen. Die derart korrigierten erfassten geometrischen Merkmale erlauben eine zuverlässige Beurteilung nicht nur der Qualität der hergestellten Formteile, sondern auch von Problemen im Herstellungsprozess der Gießmaschine. Die korrigierten geometrischen Merkmale lassen sich daher auch vorteilhaft zur Regelung des Herstellungsprozesses nutzen.

In Versuchsreihen mit Muster-Formteilen der zu untersuchenden übereinstimmenden Formteile wird die Kalibrierfunktion erstellt. Das geometrische Merkmal der zur Erstellung der Kalibrierfunktion verwendeten Muster-Formteile muss einem Sollwert entsprechen beziehungsweise in einem Sollbereich liegen. Die zu erstellende Kalibrierfunktion beschreibt die Änderung des geometrischen Merkmals des Muster-Formteils in Abhängigkeit von der Temperatur.

Die massenhafte Erfassung des geometrischen Merkmals der übereinstimmenden Formteile erfolgt mithilfe mindestens einer digitalen Kamera, während die Formteile das Inspektionssystem in einem Förderstrom durchlaufen. Die Objektrate liegt vorzugsweise im Bereich von 40-80 Formteilen/Sekunde.

Um die hohen Objektraten zu ermöglichen, muss auch die Temperatur jedes Formteils mit einer übereinstimmenden Objektrate erfasst werden, während die Formteile das Inspektionssystem in dem Förderstrom durchlaufen. Für das dazu erfindungsgemäß vorgesehene berührungslose Messen der Temperatur eignen sich insbesondere Strahlungssensoren, auch als Pyrometer bezeichnet. Jedes Formteil emittiert abhängig von dem Stadium der Abkühlung eine temperaturabhängige Wärmestrahlung. Diese Wärmestrahlung wird mit dem Strahlungssensor erfasst und ausgewertet. Die berührungslose Temperaturmessung hat für die vorliegende Anwendung folgende Vorteile:
- Unproblematische Messung an bewegten Formteilen
- Schnelle Temperaturmessung
- Verschleißfreiheit
- Geringe Temperatur-Beeinflussung der Formteile
- Vermeidung mechanischer Beschädigungen der Formteile

Der Bereich der Messwellenlänge des Strahlungssensors hängt einerseits von dem zu messenden Werkstoff des Formteils und der zu erwartenden Temperatur ab. Unter Berücksichtigung der üblichen Transportdauer der Formteile zwischen einer Spritzgießmaschine und einem optischen Inspektionssystem kommen Strahlungssensoren für die Messung geringerer Temperaturen im Bereich von 20-100° Celsius in Betracht. Derartige Sensoren weisen eine Messwellenlänge im Bereich des LWIR auf, d.h. zwischen 8-14 pm.

Die Strahlungssensoren sind beispielsweise thermische oder photoelektrische Detektoren, insbesondere ungekühlte oder gekühlte Photodioden. Die Messwellenlänge wird einerseits durch den verwendeten Detektor und ggf. durch vorgeschaltete optische Filter bestimmt. Abhängig vom Messwellenlängenbereich sind die Strahlungssensoren fensterlos oder mit Linsen aus Glas, Quarzglas oder aus Kristallen versehen.

Das Erfassen des geometrischen Merkmals und das berührungslose Messen der Temperatur jedes Formteils erfolgt erfindungsgemäß während die Formteile das Inspektionssystem in einem Förderstrom durchlaufen. Übliche Geschwindigkeiten der Formteile in dem Förderstrom eines Inspektionssystems für spritzgegossene Formteile betragen zwischen 100m/min bis 240m/min. Der zeitliche Abstand zwischen der Erfassung des geometrischen Merkmals jedes Formteils und des berührungslosen Messens der Temperatur ist aufgrund der üblichen Größe des Inspektionssystems und der hohen Geschwindigkeit des Förderstroms außerordentlich gering. Eine weitere Abkühlung der Formteile durch den zeitlichen Abstand der Messungen in dem Inspektionssystem ist daher praktisch zu vernachlässigen. In jedem Fall ist in dem Inspektionssystem sicherzustellen, dass der Zeitraum zwischen dem Erfassen des geometrischen Merkmals und dem berührungslosen Messen der Temperatur jedes Formteils eine Sekunde nicht übersteigt.

Vorzugsweise wird innerhalb des Inspektionssystems die Temperatur jedes Formteils gemessen, bevor die geometrischen Merkmale erfasst werden. Grundsätzlich ist jedoch auch die umgekehrte Messreihenfolge möglich.

Um die Auflösung der gemessenen Temperatur und der geometrischen Merkmale zu verbessern durchlaufen die Formteile das Inspektionssystem vorzugsweise in einem einreihigen Förderstrom.

In einer vorteilhaften Ausgestaltung der Erfindung werden die Formteile in dem einreihigen Förderstrom zudem vereinzelt, sodass sämtliche Formteile einen übereinstimmenden Abstand zueinander aufweisen. Hierdurch kann sichergestellt werden, dass sich jeweils nur ein Formteil im Strahlengang der digitalen Kamera und des Strahlungssensors beim Durchlauf durch das Inspektionssystem befindet.

Der Strahlengang des Strahlungssensors definiert dessen Erfassungsbereich. Der Strahlengang des Strahlungssensors kann über eine zum Strahlungssensor gehörige Optik fokussiert werden. In diesem Fall schließt sich an einen ersten konvergenten Abschnitt des Strahlengangs ein zweiter, divergenter Abschnitt an. Ohne eine derartige fokussierende Optik verläuft der Strahlengang ausgehend von dem Strahlungssensor divergent.

Die Trägheit des Strahlungssensors kann bei sehr hohen Geschwindigkeiten der Formteile in dem Förderstrom abhängig von dem verwendeten Strahlungssensor zu Ungenauigkeiten der Temperaturmesswerte führen. In einer Ausgestaltung der Erfindung ist es daher vorgesehen, dass die Geschwindigkeit des Förderstroms der Formteile zeitweilig reduziert wird. Die periodische Reduzierung der Geschwindigkeit des Förderstroms erlaubt es, zeitweilig besonders genaue Temperaturmesswerte zu erhalten und diese einer separaten Auswertung zuzuführen. Für die höhere Genauigkeit muss die resultierende Beeinträchtigung der durchschnittlichen Objektrate in Kauf genommen werden.

Um gleichbleibende kontrollierte Randbedingungen für die Temperaturmessung mit dem Strahlungssensor zu schaffen und damit verlässliche Temperaturmesswerte zu erhalten, wird in einer Ausgestaltung der Erfindung vorgeschlagen, dass der Strahlengang des mindestens einen Strahlungssensors auf eine Blende auftrifft und der Förderstrom den Strahlengang zwischen dem mindestens einen Strahlungssensor und der Blende durchläuft. Die Temperatur der Blende wird auf einem vorgegebenen Niveau konstant gehalten. Das Konstanthalten der Temperatur der Blende bewirkt, dass in dem Zeitintervall, in dem sich das Formteil in dem Erfassungsbereich des Strahlungssensors befindet und sich die Strahlung des Formteils und des durch die Blende definierten Hintergrunds überlagern, stets gleiche Verhältnisse herrschen. Die Temperatur der Blende wird beispielsweise mit einem Peltierelement oder einem anderen Heiz-Kühlelement konstant gehalten.

Um ungünstige Auswirkungen der Trägheit des Strahlungssensors zu mindern, ist der Strahlungssensor in einer Ausgestaltung der Erfindung nur geringen Änderungen der Strahlung ausgesetzt. Um die Strahlungsänderungen klein zu halten, wird die Temperatur der Blende auf einer Temperatur konstant gehalten, die in dem zu erwartenden Temperaturfenster der Temperaturen der Formteile liegt. Sofern die Formteile während des Durchlaufens durch das optische Inspektionssystem beispielsweise annähernd auf Umgebungstemperatur abgekühlt sind, wird die Temperatur der Blende beispielsweise auf Umgebungstemperatur konstant gehalten. Der Strahlungssensor ist damit ständig einer der Umgebungstemperatur entsprechenden Strahlung der Blende ausgesetzt, die sich durch die durchlaufenden Formteile mit geringfügig von der Umgebungstemperatur abweichenden Temperaturen nur wenig ändert.

Ein Ziel des geregelten Herstellungsprozesses der Formteile besteht darin, bestimmte geometrische Merkmale der hergestellten Formteile, beispielsweise Verschlusskappen aus Kunststoff, konstant zu halten. Ein wesentliches geometrisches Merkmal einer Verschlusskappe ist beispielsweise deren Durchmesser, der konstant gehalten werden soll. Um den Herstellungsprozess zu regeln, werden die korrigierten, d.h. die mittels der gemessenen Temperatur normierten geometrischen Merkmale als Regelgröße mit einem Sollwert für das geometrische Merkmal, hier dem Solldurchmesser der Verschlusskappe, als Führungsgröße verglichen. Eine Regelabweichung zwischen der Regel- und Führungsgröße wird einem Regler zugeführt, der eine Stellgröße für eine Regelungsstrecke der Gießmaschine, hier einer Spritzgießmaschine bildet. Stellgrößen für die Regelungsstrecke der Spritzgießmaschine können beispielsweise der Spritzgießdruck, die Temperatur der Plastifiziereinheit, die Kühltemperatur des Formwerkzeugs oder die Nachdrückzeit sein. Mittels dieser Stellgröße lassen sich verschiedene Störgrößen des Spritzgießprozesses ausregeln, wie beispielsweise Änderungen der Kunststoffschmelze, Änderungen der Kühlmittel-Temperatur sowie Änderungen im Extruder aufgrund von Ablagerungen oder Verschleiß.

Nachfolgend wird die Erfindung anhand eines Ausführungsbeispiels näher erläutert:

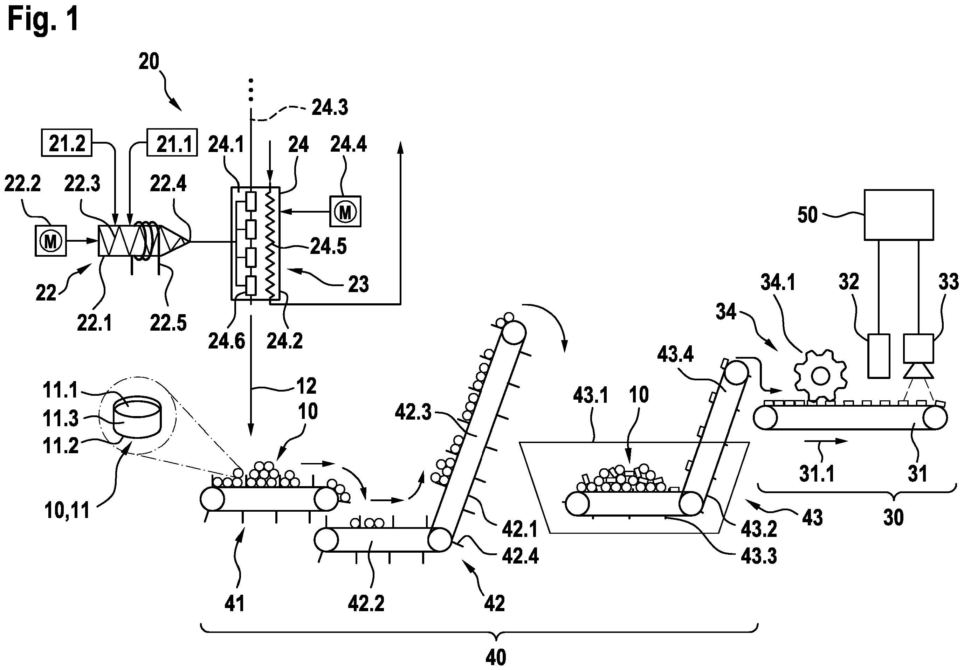

- **Figur 1**: zeigt eine schematische Anordnung einer Vorrichtung zur Durchführung des erfindungsgemäßen Verfahrens,

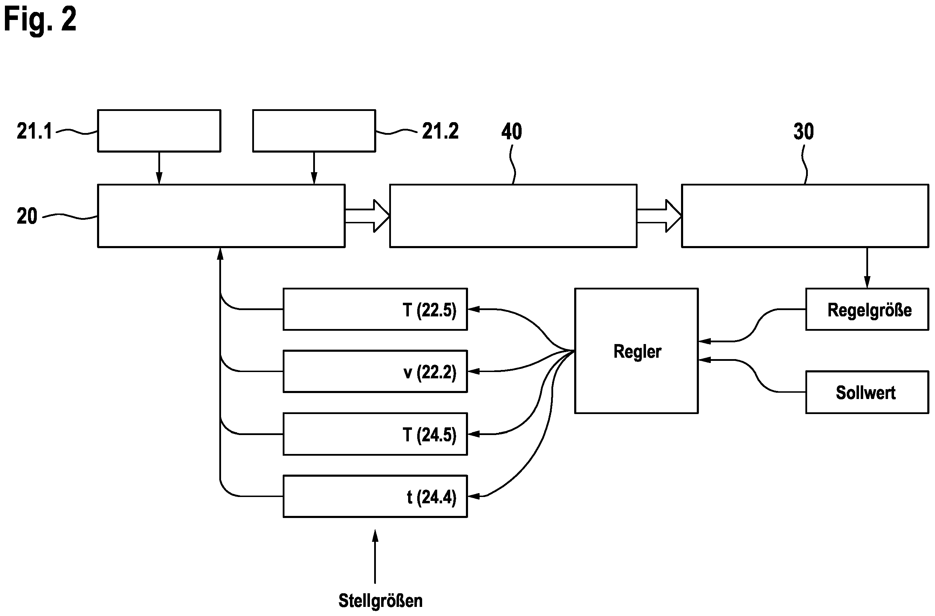

- **Figur 2**: zeigt eine schematische Darstellung eines geregelten Herstellungsprozesses von Formteilen unter Nutzung des erfindungsgemäßen Verfahrens sowie
- **Figur 3**: zeigt eine vergrößerte Darstellung einer digitalen Kamera und eines Strahlungssensors eines Inspektionssystems zum Erfassen der geometrischen Merkmale.

Die Vorrichtung zum Erfassen mindestens eines geometrischen Merkmals von übereinstimmenden Formteilen (10) umfasst als wesentliche Bestandteile eine Gießmaschine (20), ein Inspektionssystem (30), eine Fördereinrichtung (40), die zum Transportieren der entformten Formteile (10) zu dem Inspektionssystem (30) eingerichtet ist, sowie ein Rechnersystem (50). Bei den Formteilen (10) handelt es sich beispielsweise um Verschlusskappen (11) mit einer stirnseitigen Öffnung (11.1), einer der stirnseitigen Öffnung (11.1) gegenüberliegenden Bodenfläche (11.2) sowie einer sich zwischen der Bodenfläche (11.2) und der Öffnung (11.1) erstreckenden Mantelfläche (11.3).

Die Gießmaschine (20) ist im dargestellten Ausführungsbeispiel eine Spritzgießmaschine in der als Ausgangsmaterialien (21) Kunststoffgranulat (21.1) und Farbstoff (21.2) verarbeitet werden. Die dargestellte Spritzgießmaschine besteht aus zwei Einheiten, der Plastifiziereinheit (22), welche das Ausgangsmaterial (21) plastifiziert, aufbereitet und dosiert sowie einer Schließeinheit (23), die ein Formwerkzeug (24) schließt, zuhält und wieder öffnet.

Die Plastifiziereinheit (22) umfasst einen Plastifizierzylinder (22.1) und eine darin mittels eines Motors (22.2) drehbar angeordnete Schnecke (22.3). An einem Ende des Plastifizierzylinders (22.1) ist ein nicht dargestellter Einfülltrichter zum Beschicken mit dem Ausgangsmaterial (21) angeordnet. Am anderen Ende des Plastifizierzylinders (22.1) befindet sich eine Düse (22.4). Diese stellt den Übergang zur Schließeinheit (23) dar.

Die Schließeinheit (23) umfasst das Formwerkzeug (24), das in zwei Hälften entlang einer Formtrennebene (24.3) trennbar ist. Das Formwerkzeug (24) weist mehrere Formnester, nachfolgend als Kavitäten (24.6) bezeichnet, beispielsweise 96 Kavitäten (24.6) auf. Die Formhälften sind üblicherweise an zwei der Übersichtlichkeit halber nicht dargestellten Aufspannplatten montiert, von denen die eine, die Düsenseite (24.1) starr und der Düse (22.4) der Plastifiziereinheit (22) zugewandt ist. Die Auswerferseite (24.2) des Formwerkzeuges (24) ist beweglich angeordnet und wird mittels eines motorischen Antriebes (24.4) von der Düsenseite (24.1) wegbewegt oder mit Kraft auf diese gepresst. Die Auswerferseite (24.2) enthält einen Auswerfer-Mechanismus, welcher die Formteile (10) aus den Kavitäten (24.6) des Formwerkzeuges (24) entformt. Ferner ist in der Auswerferseite (24.2) des Formwerkzeuges (24) eine Kühlung (24.5) zur Temperierung des Formwerkzeuges (24) angeordnet.

Das Ausgangsmaterial (21) rieselt in Form eines Granulats in die Gänge der rotierenden Schnecke (22.3) ein. Das Granulat wird durch die Schnecke (22.3) in Richtung der Düse (22.4) gefördert und durch den mittels einer Heizung (22.5) beheizten Plastifizierzylinder (22.1) und die Friktionswärme erwärmt und aufgeschmolzen. Die Schmelze sammelt sich vor der Düse (22.4). Sobald sich eine für das Befüllen der Kavitäten (24.6) ausreichende Menge an Schmelze angesammelt hat, beginnt die Einspritzphase in die Kavitäten (24.6) des Formwerkzeuges (24). Dabei wird die Schmelze unter hohem Druck durch die Düse (22.4) über ein Angusssystem in die Kavitäten (24.6) gedrückt. Die eingespritzte Schmelze weist typischerweise eine Temperatur zwischen 200-300° Celsius auf. Da das Formwerkzeug (24) eine geringere Temperatur aufweist als die Schmelze, kühlt diese bereits beim Einspritzen ab. Um die mit dem Abkühlen einhergehende Volumenschwindung teilweise zu kompensieren wird auch nach dem Einspritzen vielfach ein reduzierter Druck aufrechterhalten, damit Schmelze nachfließen und die Schwindung ausgleichen kann. Dieser Vorgang wird auch als Nachdrücken bezeichnet.

Nach Beendigung des Nachdrückens kann die Düse (22.4) geschlossen werden und in der Plastifiziereinheit (22) bereits der Plastifizier- und Dosiervorgang für den nächsten Einspritzvorgang beginnen. Die zuvor eingespritzte Schmelze kühlt in dem Formwerkzeug (24) ab, bis eine zum Entformen der Formteile (10) hinreichende Steifigkeit erreicht ist. Zu diesem Zeitpunkt weisen die Formteile noch eine gegenüber der Umgebungstemperatur der Gießmaschine (20) deutlich erhöhte Temperatur auf, die zwischen der Temperatur der eingespritzten Schmelze und der Umgebungstemperatur liegt.

Zum Entformen der Formteile (10) aus dem Formwerkzeug (24) wird die Auswerferseite (24.2) des Formwerkzeuges (24) geöffnet und die Formteile (10) werden durch in die Kavitäten (24.6) hineindringende Stifte ausgeworfen. Bei der Herstellung von Verschlusskappen (11) werden beispielsweise alle drei Sekunden 96 Verschlusskappen (11) aus den Kavitäten (24.6) ausgestoßen. Die Verschlusskappen (11) fallen als Schüttgut in Richtung des Pfeiles (12) auf ein Ausförderband (41), das unterhalb des Formwerkzeuges (24) angeordnet ist.

An das Ausförderband (41) schließt sich ein Kühlsteigförderer (42) mit einem horizontalen Abschnitt (42.2) und einem schräg nach oben geneigten Abschnitt (42.3) an, der ein gasdurchlässiges Transportband (42.1) sowie an dem Transportband (42.1) quer zur Förderrichtung angeordnete Mitnehmer (42.4) aufweist. Das gasdurchlässige Transportband (42.1) wird von Kühlluft durchströmt, sodass der Kühlsteigförderer (42) die von dem Ausförderband (41) auf den horizontalen Abschnitt (42.2) übergebenen Verschlusskappen (11) nicht nur weiter transportiert, sondern mittels der das gasdurchlässige Transportband (42.1) durchströmenden Kühlluft zugleich weiter abkühlt. An der oberen Umlenkung des Transportbandes (42.1) fallen die Verschlusskappen (11) ungeordnet in einen Zwischenspeicher (43.1) eines Sortierers (43). Der Sortierer (43) umfasst ein umlaufendes Transportband (43.2), an dem quer zur Förderrichtung Lamellen (43.3), auch als Sortierleisten bezeichnet, angeordnet sind. Mittels der Sortierleisten werden die als Schüttgut in dem Zwischenspeicher (43.1) liegenden Verschlusskappen (11) in eine schräg nach oben geneigte Sortierstrecke (43.4) des Sortierers (43) gefördert. In der Sortierstrecke (43.3) findet die Sortierung mittels Schwerkraft statt. Verschlusskappen (11), die mit ihrer Bodenfläche (11.2) nicht auf den Lamellen (43.3) aufliegen, kippen aufgrund des abweichenden Schwerpunktes gegenüber den korrekt orientierten Verschlusskappen über die Lamellenkante zurück in den Zwischenspeicher (43.1). In einem oberen Bereich des Transportbandes (43.2), der sich an die Sortierstrecke (43.4) anschließt, werden die Verschlusskappen (11) mit einem Luftstrom seitlich ausgeblasen und mittels Führungen ein einspuriger Förderstrom von Verschlusskappen (11) geformt.

Dieser einspurige Förderstrom durchläuft das Inspektionssystem (30) mittels eines Stetigförderers (31) in einer Transportrichtung (31.1). Der Stetigförderer (31) ist beispielsweise als umlaufendes zweispuriges Transportband ausgeführt. Der Stetigförderer (31) kann sich auch aus mehreren umlaufenden Transportbändern mit entsprechenden Übergaben zwischen den Transportbändern zusammensetzen.

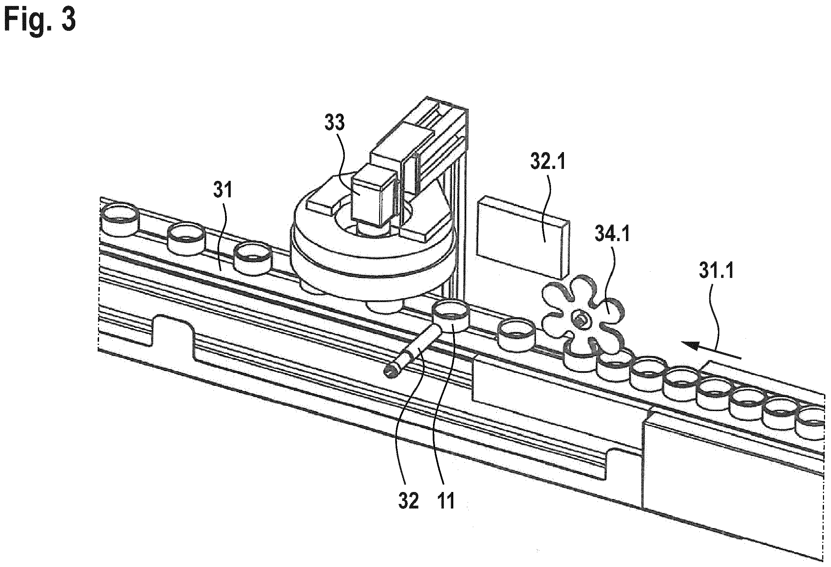

Oberhalb des Stetigförderers (31) ist eine digitale Kamera (33) zum Erfassen des mindestens einen geometrischen Merkmals jeder Verschlusskappe (11) angeordnet. Im vorliegenden Fall ist die digitale Kamera (33) derart oberhalb des Stetigförderers (31) angeordnet, dass sie den Durchmesser der stirnseitigen Öffnung (11.1) der mit der Bodenfläche (11.2) auf dem zweispurigen Transportband des Stetigförderers (31) aufliegenden Verschlusskappen (11) erfasst. In Transportrichtung (31.1) stromauf der digitalen Kamera (33) ist ein Strahlungssensor (32) zum berührungslosen Messen der Temperatur jeder Verschlusskappe (11) angeordnet. Der Strahlungssensor (32) ist, wie sich insbesondere aus Figur 3 ergibt, mit seiner Messachse vorzugsweise in horizontaler Richtung angeordnet und auf die Mantelfläche (11.3) der durchlaufenden Verschlusskappen (11) ausgerichtet. Um gleichbleibende kontrollierte Randbedingungen für die Temperaturmessung mit dem Strahlungssensor (32) zu schaffen, trifft der Strahlengang des Strahlungssensors (32) auf eine Blende (32.1) auf. Die vereinzelten Kappen (11) durchlaufen den Strahlengang zwischen dem Strahlungssensor (32) und der Blende (32.1) in Transportrichtung (31.1). Die Temperatur der Blende (32.1) wird mittels eines nicht dargestellten Peltierelements auf einem vorgegebenen Niveau konstant gehalten.

In Transportrichtung (31.1) stromauf des Strahlungssensors (32) ist ein Separator (34) angeordnet, der zum Vereinzeln der in dem einreihigen Förderstrom transportierten Verschlusskappen (11) eingerichtet ist, sodass sämtliche Verschlusskappen (11) in dem Förderstrom einen übereinstimmenden Abstand zueinander aufweisen, wie dies in Figur 3 erkennbar ist. Der Separator (34) wird von einem verzahnten Rad (34.1) gebildet. Die Achse des verzahnten Rades (34.1) verläuft horizontal, so dass die Zähne des Rades (34.1) in die stirnseitigen Öffnungen (11.1) der Verschlusskappen (11) eingreifen.

Bei dem Strahlungssensor (32) handelt es sich um ein Infrarot-Pyrometer für sehr schnelle Messungen in einem Temperaturbereich von -50 bis 975 Grad Celsius mit einer Empfangswellenlänge im Infrarotbereich von 8-14 pm.

Die Erfassung der geometrischen Merkmale der Formteile (10) sowie die Regelung des Herstellungsprozesses werden nachfolgend erläutert:
Die aus dem Formwerkzeug (24) der Gießmaschine (20) entformten Verschlusskappen (11) werden während des Abkühlens von der erhöhten Temperatur aus der Gießhitze mittels der Fördereinrichtung (40) zu dem Inspektionssystem (30) transportiert. Auf dem Transportweg von der Gießmaschine (20) zum Inspektionssystem (30) gibt es unterschiedliche Orte, an denen die Verschlusskappen nicht entsprechend der Reihenfolge ihrer Herstellung in der Gießmaschine (20) weitertransportiert werden. Insbesondere in dem Sortierer (43) wird die zeitliche Reihenfolge durch das Zurückweisen fehlerhaft orientierter Verschlusskappen (11) sowie die zufällige Lage des Schüttgutes in dem Zwischenspeicher (43.1) aufgehoben.

Die Verschlusskappen (11) erreichen daher das optische Inspektionssystem (30) in unterschiedlichen Stadien der Abkühlung auf die Umgebungstemperatur. Die Verschlusskappen (11) ändern ihre geometrischen Merkmale, wie beispielsweise die Form oder den Durchmesser nach dem Entformen aus dem Formwerkzeug (24) besonders stark. Die Änderung der geometrischen Merkmale hängt auch von der Zusammensetzung des Ausgangsmaterials (21), insbesondere von dem zugegebenen Farbstoff (21.2) ab. Die von der digitalen Kamera (33) in dem Inspektionssystem (30) gemessenen Werte des Durchmessers erlauben daher keine sichere Prognose, welchen Durchmesser die Verschlusskappe (11) nach dem vollständigen Abkühlen auf Umgebungstemperatur aufweist. Um diese Unschärfe der von der digitalen Kamera (33) erfassten geometrischen Merkmale zu korrigieren, werden die erfassten Durchmesserwerte mit Hilfe einer Kalibrierfunktion unter Berücksichtigung der von dem Strahlungssensor (33) erfassten Temperaturen korrigiert. Die Kalibrierfunktion wird zuvor anhand von Muster-Verschlusskappen mit einem Durchmesser im Sollbereich bestimmt und beschreibt die Änderung des geometrischen Merkmals, hier des Durchmessers, in Abhängigkeit von der Temperatur der Muster-Verschlusskappe. Hierzu wird das Temperaturverhalten einer Muster-Verschlusskappe über den zu erwartenden Temperaturbereich während der Abkühlung vom Zeitpunkt der Entformung bis auf die Umgebungstemperatur untersucht. Die derart erhaltene Kalibrierfunktion wird beispielsweise in dem Rechnersystem (50) des Inspektionssystems (30) abgelegt. Unter Berücksichtigung der von dem Strahlungssensor (32) zu jedem Durchmesserwert einer Verschlusskappe (11) erfassten Temperatur kann mit Hilfe der Kalibrierfunktion ein korrigierter, temperaturnormierter Durchmesserwert ermittelt werden, beispielsweise der Durchmesserwert nach vollständiger Abkühlung auf Umgebungstemperatur.

Das Korrigieren des Durchmesserwertes kann für jede Verschlusskappe (11) einzeln erfolgen. Alternativ können die erfassten Durchmesserwerte und die gemessenen Temperaturen gruppenweise korrigiert werden. Für die gruppenweise Verarbeitung der Werte kommt beispielsweise eine vorherige Klassierung der gemessenen Temperaturen und der zugehörigen Durchmesserwerte in Betracht.

Die korrigierten Durchmesserwerte werden als Regelgröße mit einem Sollwert für den Durchmesser als Führungsgröße verglichen. Eine Regelabweichung zwischen Regel- und Führungsgröße außerhalb eines Toleranzbereichs wird einem Regler zugeführt, der über ein Stellglied eine Stellgröße für eine Regelungsstrecke der Spritzgießmaschine bildet. Als Stellgröße kommen bei einer Spritzgießmaschine beispielsweise die Temperatur der Heizung (22.5) der Plastifiziereinheit (22), die Geschwindigkeit der Schnecke (22.3), die Temperatur der Kühlung (24.5) des Formwerkzeuges (24) sowie die Einstellung des Öffnungszeitpunktes der Schließeinheit (23) in Betracht. Mit diesen Stellgrößen lassen sich Störgrößen im Ausgangsmaterial, Änderungen der Kühlmitteltemperatur sowie schleichende Änderungen in der Plastifiziereinheit durch Ablagerung oder Verschleiß ausregeln.

**Bezugszeichenliste**

| **Nr.** | **Bezeichnung** | **Nr.** | **Bezeichnung** |
|---|---|---|---|
| 10. | Formteile | 33. | Kamera |
| 11. | Verschlusskappen | 34. | Separator |
| 11.1 | Stirnseitige Öffnung | 34.1 | Verzahntes Rad |
| 11.2 | Bodenfläche | 40. | Fördereinrichtung |
| 11.3 | Mantelfläche | 41. | Ausförderband |
| 12. | Pfeil | 42. | Kühlsteigförderer |
| 20. | Gießmaschine | 42.1 | Transportband |
| 21. | Ausgangsmaterial | 42.2 | Horizontaler Abschnitt |
| 21.1 | Kunststoffgranulat | 42.3 | Geneigter Abschnitt |
| 21.1 | Farbstoff | 42.4 | Mitnehmer |
| 22. | Plastifiziereinheit | 43. | Sortierer |
| 22.1 | Plastifizierzylinder | 43.1 | Zwischenspeicher |
| 22.2 | Motor | 43.2 | Transportband |
| 22.3 | Schnecke | 43.3 | Lamellen |
| 22.4 | Düse | 43.4 | Sortierstrecke |
| 22.5 | Heizung | 50. | Rechnersystem |
| 23. | Schließeinheit | | |
| 24. | Formwerkzeug | | |
| 24.1 | Düsenseite | | |
| 24.2 | Auswerferseite | | |
| 24.3 | Formtrennebene | | |
| 24.4 | Antrieb | | |
| 24.5 | Kühlung | | |
| 24.6 | Kavitäten | | |
| 30. | Inspektionssystem | | |
| 31. | Stetigförderer | | |
| 31.1 | Transportrichtung | | |
| 32. | Strahlungssensor | | |
| 32.1 | Blende | | |

## Patentansprüche

1. Verfahren zum Erfassen eines geometrischen Merkmals von übereinstimmenden Formteilen (10) in einem Inspektionssystem (30) umfassend folgende Schritte:
- Herstellen der Formteile (10) in einem Formwerkzeug (24) einer Gießmaschine (20),
- Entformen der Formteile (10) aus dem Formwerkzeug (24) mit einer gegenüber einer Umgebungstemperatur erhöhten Temperatur,
- Abkühlen der Formteile (10) von der erhöhten Temperatur auf die Umgebungstemperatur,
- Transportieren der entformten Formteile (10) zu dem Inspektionssystem (30) während des Abkühlens, wobei die Dauer des Transports der entformten Formteile (10) zu dem Inspektionssystem (30) zumindest teilweise unterschiedlich lang ist,
- Erfassen des geometrischen Merkmals und berührungsloses Messen der Temperatur jedes Formteils (10) während die Formteile das Inspektionssystem (30) in einem Förderstrom durchlaufen und
- Korrigieren der erfassten geometrischen Merkmale mit Hilfe einer Kalibrierfunktion unter Berücksichtigung der gemessenen Temperaturen, wobei die Kalibrierfunktion die Änderung des geometrischen Merkmals in Abhängigkeit von der Temperatur eines Formteils (10) beschreibt, dessen geometrisches Merkmal in einem Sollbereich für die herzustellenden Formteile (10) liegt.

2. Verfahren nach Anspruch 1, **dadurch gekennzeichnet, dass** das Erfassen des geometrischen Merkmals mit Hilfe mindestens einer digitalen Kamera (33) erfolgt.

3. Verfahren nach Anspruch 1 oder 2, **dadurch gekennzeichnet, dass** das berührungslose Messen der Temperatur mittels mindestens eines Strahlungssensors (32) erfolgt.

4. Verfahren nach einem der Ansprüche 1 bis 3, **dadurch gekennzeichnet, dass** der Zeitraum zwischen dem Erfassen des geometrischen Merkmals und dem berührungslosen Messen der Temperatur jedes Formteils (10) maximal 1 Sekunde beträgt.

5. Verfahren nach einem der Ansprüche 1 bis 4, **dadurch gekennzeichnet, dass** die Formteile (10) das Inspektionssystem (30) in einem einreihigen Förderstrom durchlaufen.

6. Verfahren nach Anspruch 5, **dadurch gekennzeichnet, dass** die Formteile in dem einreihigen Förderstrom vereinzelt werden, so dass sämtliche Formteile (10) einen übereinstimmenden Abstand zueinander aufweisen.

7. Verfahren nach einem der Ansprüche 1 bis 6, **dadurch gekennzeichnet, dass** die Formteile (10) in dem Förderstrom mit einer Geschwindigkeit zwischen 100 m/min bis 240 m/min transportiert werden.

8. Verfahren nach einem der Ansprüche 1 bis 7, **dadurch gekennzeichnet, dass** das Erfassen der geometrischen Merkmale und das berührungslose Messen der Temperatur mit einer Objektrate im Bereich von 40 bis 80 Formteilen/Sekunde erfolgt.

9. Verfahren nach einem der Ansprüche 1 bis 8, **dadurch gekennzeichnet, dass** die Geschwindigkeit des Förderstroms der Formteile (10) zeitweilig reduziert wird.

10. Verfahren nach einem der Ansprüche 3 bis 9, **dadurch gekennzeichnet, dass** der Strahlengang des mindestens einen Strahlungssensors (32) auf eine Blende auftrifft und der Förderstrom den Strahlengang zwischen dem mindestens einen Strahlungssensor (32) und der Blende durchläuft.

11. Verfahren nach Anspruch 10, **dadurch gekennzeichnet, dass** die Temperatur der Blende konstant gehalten wird.

12. Verfahren nach einem der Ansprüche 1 bis 11, **dadurch gekennzeichnet, dass** die korrigierten geometrischen Merkmale als Regelgröße mit einem Sollwert für das geometrische Merkmal als Führungsgröße verglichen werden, eine außerhalb eines Toleranzbereichs liegende Regelabweichung zwischen Regel- und Führungsgröße einem Regler zugeführt wird, der eine Stellgröße für eine Regelungsstrecke der Gießmaschine (20) bildet.

13. Vorrichtung zum Erfassen mindestens eines geometrischen Merkmals von übereinstimmenden Formteilen (10) umfassend
- eine Gießmaschine (20) mit einem Formwerkzeug (24) eingerichtet zum Herstellen der Formteile (10),
- ein Inspektionssystem (30), welches mindestens eine digitale Kamera (33) und mindestens einen Strahlungssensor (32) sowie einen Stetigförderer (31) aufweist, wobei
- jede digitale Kamera (33) zum Erfassen des geometrischen Merkmals jedes Formteils (10) eingerichtet ist,
- jeder Strahlungssensor (32) zum berührungslosen Messen der Temperatur jedes Formteils (10) eingerichtet ist,
- der Stetigförderer (31) die Formteile (10) in einem Förderstrom fördert und derart zu jeder digitalen Kamera (33) und jedem Strahlungssensor (32) angeordnet ist, dass jedes Formteil (10) in dem Förderstrom in den Strahlengang jeder digitalen Kamera (33) sowie den Strahlengang jedes Strahlungssensor (32) gelangt,
- eine Fördereinrichtung (40) eingerichtet zum Transportieren der Formteile (10) zu dem Inspektionssystem (30) während des Abkühlens der aus dem Formwerkzeug (24) entformten Formteile (10), wobei die Fördereinrichtung (40) weiter derart eingerichet ist, dass die Dauer des Transportes der entformten Formteile (10) zu dem Inspektionssystem (30) zumindest teilweise unterschiedlich lang ist,
- ein Rechnersystem (50), eingerichet zur Verarbeitung und zum Korrigieren der erfassten geometrischen Merkmale mit Hilfe einer Kalibrierfunktion unter Berücksichtigung der gemessenen Temperaturen, wobei die in dem Rechnersystem (50) verwendbare Kalibrierfunktion die Änderung des geometrischen Merkmals in Abhängigkeit von der Temperatur eines Formteils beschreibt, dessen geometrisches Merkmal in einem Sollbereich für die herzustellenden Formteile (10) liegt.

14. Vorrichtung nach Anspruch 13, **dadurch gekennzeichnet, dass** der Stetigförderer (31) die Formteile (10) in einem einreihigen Förderstrom transportiert.

15. Vorrichtung nach Anspruch 14, **dadurch gekennzeichnet, dass** in Transportrichtung (31.1) des Stetigförderers (31) stromauf jedes Strahlungssensors (32) und jeder digitalen Kamera (33) ein Separator (34) angeordnet ist, der zum Vereinzeln der Formteile (10) eingerichtet ist, so dass sämtliche Formteile in dem Förderstrom einen übereinstimmenden Abstand zueinander aufweisen.

16. Vorrichtung nach einem der Ansprüche 13 bis 15, **dadurch gekennzeichnet, dass** die Geschwindigkeit des Stetigförderers (31) auf unterschiedliche Geschwindigkeiten einstellbar ist.

17. Vorrichtung nach einem der Ansprüche 13 bis 16**, dadurch gekennzeichnet, dass** der mindestens eine Strahlungssensor (32) einen Strahlengang aufweist, in dem Strahlengang des Strahlungssensors eine temperaturregelbare Blende angeordnet ist und der Stetigförderer (31) derart zu dem mindestens einen Strahlungssensor (32) und der Blende angeordnet ist, dass der Förderstrom der Formteile (10) den Strahlengang zwischen dem mindestens einen Strahlungssensor (32) und der Blende durchläuft.

## Claims

1. Method for detecting a geometric feature of consistent moulded parts (10) in an inspection system (30) comprising the following steps:
- producing the moulded parts (10) in a moulding tool (24) of a casting machine (20),
- demoulding the moulded parts (10) from the moulding tool (24) at an elevated temperature compared with an ambient temperature,
- cooling down the moulded parts (10) from the elevated temperature to the ambient temperature,
- transporting the demoulded moulded parts (10) to the inspection system (30) during cooling, wherein the duration of the transporting of the demoulded moulded parts (10) to the inspection system (30) is variously long at least in some cases,
- detecting the geometric feature and contactlessly measuring the temperature of each moulded part (10) whilst the moulded parts are passed through the inspection system (30) in a conveyed stream, and
- correcting the detected geometric features using a calibrating function taking into account the measured temperatures, wherein the calibrating function describes the change in the geometric feature depending on the temperature of a moulded part (10), the geometric feature of which lies in a desired range for the moulded parts (10) to be produced.

2. Method according to Claim 1, **characterized in that** the detection of the geometric feature is performed using at least one digital camera (33).

3. Method according to Claim 1 or 2, **characterized in that** the contactless measurement of the temperature is performed by means of at least one radiation sensor (32) .

4. Method according to one of Claims 1 to 3, **characterized in that** the time period between the detection of the geometric feature and the contactless measurement of the temperature of each moulded part (10) is a maximum of 1 second.

5. Method according to one of Claims 1 to 4, **characterized in that** the moulded parts (10) pass through the inspection system (30) in a single-row conveyed stream.

6. Method according to Claim 5, **characterized in that** the moulded parts in the single-row conveyed stream are individually separated so that all the moulded parts (10) have the same distance from one another.

7. Method according to one of Claims 1 to 6, **characterized in that** the moulded parts (10) are transported in the conveyed stream at a speed of between 100 m/min and 240 m/min.

8. Method according to one of Claims 1 to 7, **characterized in that** the detection of the geometric features and the contactless measurement of the temperature are performed at an object rate in the range of 40 to 80 moulded parts/second.

9. Method according to one of Claims 1 to 8, **characterized in that** the speed of the conveyed stream of the moulded parts (10) is reduced temporarily.

10. Method according to one of Claims 3 to 9, **characterized in that** the beam path of the at least one radiation sensor (32) impinges upon a diaphragm and the conveyed stream passes through the beam path between the at least one radiation sensor (32) and the diaphragm.

11. Method according to Claim 10, **characterized in that** the temperature of the diaphragm is kept constant.

12. Method according to one of Claims 1 to 11, **characterized in that** the corrected geometric features are compared as a controlled variable with a desired value for the geometric feature as a reference variable, a control deviation between the controlled variable and the reference variable outside a tolerance range is fed to a controller, which forms a control variable for a controlled section of the casting machine (20).

13. Device for detecting at least one geometric feature of consistent moulded parts (10) comprising:
- a casting machine (20) with a moulding tool (24) adapted for producing the moulded parts (10),
- an inspection system (30) which comprises at least one digital camera (33) and at least one radiation sensor (32) as well as a continuous conveyor (31), wherein
- each digital camera (33) is adapted for detecting the geometric feature of each moulded part (10),
- each radiation sensor (32) is adapted for contactless measurement of the temperature of each moulded part (10),
- the continuous conveyor (31) conveys the moulded parts (10) in a conveyed stream and is arranged in relation to each digital camera (33) and each radiation sensor (32) in such a way that each moulded part (10) in the conveyed stream enters into the beam path of each digital camera (33) and the beam path of each radiation sensor (32),
- a conveying device (40) adapted for transporting the moulded parts (10) to the inspection system (30) during cooling of the moulded parts (10) demoulded from the moulding tool (24), wherein the conveying device (40) is further adapted in such a manner that the duration of the transport of the demoulded moulded parts (10) to the inspection system (30) is variously long at least in some cases,
- a computer system (50) adapted for processing and correcting the detected geometric features using a calibrating function taking into account the measured temperatures, wherein the calibrating function used in the computer system (50) describes the change in the geometric feature depending on the temperature of a moulded part, the geometric feature of which lies in a desired range for the moulded parts (10) to be produced.

14. Device according to Claim 13, **characterized in that** the continuous conveyor (31) transports the moulded parts (10) in a single-row conveyed stream.

15. Device according to Claim 14, **characterized in that** a separator (34) is arranged upstream of each radiation sensor (32) and each digital camera (33) in the transport direction (31.1) of the continuous conveyor (31), which separator (34) is adapted for individually separating the moulded parts (10) so that all the moulded parts in the conveyed stream have the same distance from one another.

16. Device according to one of Claims 13 to 15, **characterized in that** the speed of the continuous conveyor (31) can be set to different speeds.

17. Device according to one of Claims 13 to 16, **characterized in that** the at least one radiation sensor (32) comprises a beam path, a temperature-controlled diaphragm is arranged in the beam path of the radiation sensor and the continuous conveyor (31) is arranged in relation to the at least one radiation sensor (32) and the diaphragm in such a way that the conveyed stream of the moulded parts (10) passes through the beam path between the at least one radiation sensor (32) and the diaphragm.

## Revendications

1. Procédé, destiné à détecter une caractéristique géométrique de pièces moulées (10) concordantes dans un système d'inspection (30), comprenant les étapes suivantes, consistant à :
- fabriquer les pièces moulées (10) dans un outil de moulage (24) d'une machine de coulée (20),
- démouler les pièces moulées (10) de l'outil de moulage (24) à une température élevée par rapport à la température ambiante,
- faire refroidir les pièces moulées (10) de la température élevée à la température ambiante,
- transporter les pièces moulées (10) démoulées vers le système d'inspection (30) pendant leur refroidissement, la durée du transport des pièces moulées (10) démoulées vers le système d'inspection (30) étant au moins en partie différemment longue,
- détecter la caractéristique géométrique et mesurer sans contact la température de chaque pièce moulée (10) pendant que les pièces moulées traversent le système d'inspection (30) dans un flux de convoyage, et
- corriger la caractéristique géométrique détectée à l'aide d'une fonction d'étalonnage, sous considération des températures mesurées, la fonction d'étalonnage décrivant la modification de la caractéristique géométrique en fonction de la température d'une pièce moulée (10) dont la caractéristique géométrique se situe dans une plage de consigne pour les pièces moulées (10) qui doivent être fabriquées.

2. Procédé selon la revendication 1, **caractérisé en ce que** la détection de la caractéristique géométrique s'effectue à l'aide d'au moins une caméra (33) numérique.

3. Procédé selon la revendication 1 ou 2, **caractérisé en ce que** l'opération de mesure sans contact de la température s'effectue au moyen d'au moins un capteur de rayonnement (32).

4. Procédé selon l'une quelconque des revendications 1 à 3, **caractérisé en ce que** la période entre la détection de la caractéristique géométrique et l'opération de mesure sans contact de la température de chaque pièce moulée (10) s'élève au maximum à 1 seconde.

5. Procédé selon l'une quelconque des revendications 1 à 4, **caractérisé en ce que** les pièces moulées (10) traversent le système d'inspection (30) dans un flux de convoyage à une rangée.

6. Procédé selon la revendication 5, **caractérisé en ce que** les pièces moulées sont désolidarisées dans le flux de convoyage à une rangée, de sorte que toutes les pièces moulées (10) présentent un écart concordant entre elles.

7. Procédé selon l'une quelconque des revendications 1 à 6, **caractérisé en ce que** les pièces moulées (10) sont transportées dans le flux de convoyage à une vitesse comprise entre 100 m/minute à 240 m/minute.

8. Procédé selon l'une quelconque des revendications 1 à 7, **caractérisé en ce que** la détection des caractéristiques géométriques et l'opération de mesure sans contact de la température s'effectue avec un taux d'objets de l'ordre de 40 à 80 pièces moulées/seconde.

9. Procédé selon l'une quelconque des revendications 1 à 8, **caractérisé en ce que** la vitesse du flux de convoyage des pièces moulées (10) est temporairement réduite.

10. Procédé selon l'une quelconque des revendications 3 à 9, **caractérisé en ce que** la trajectoire du faisceau de l'au moins un capteur de rayonnement (32) est incidente sur un diaphragme et le flux de convoyage traverse la trajectoire du faisceau entre l'au moins un capteur de rayonnement (32) et le diaphragme.

11. Procédé selon la revendication 10, **caractérisé en ce que** la température du diaphragme est maintenue à un niveau constant.

12. Procédé selon l'une quelconque des revendications 1 à 11, **caractérisé en ce que** les caractéristiques géométriques corrigées sont comparées au titre de grandeur de réglage avec une valeur de consigne pour la caractéristique géométrique au titre de grandeur de référence, un écart de réglage situé hors d'une plage de tolérance entre la grandeur de réglage et la grandeur de référence est amenée à un régulateur, qui crée une grandeur de commande pour un trajet de régulation de la machine de coulée (20).

13. Dispositif, destiné à détecter au moins une caractéristique géométrique de pièces moulées (10) concordantes, comprenant :
- une machine de coulée (20), dotée d'un outil de moulage (24), aménagée pour fabriquer les pièces moulées (10),
- un système d'inspection (30), lequel comporte au moins une caméra (33) numérique et au moins un capteur de rayonnement (32), ainsi qu'un convoyeur en continu (31),
- chaque caméra (33) numérique étant aménagée pour détecter la caractéristique géométrique de chaque pièce moulée (10),
- chaque capteur de rayonnement (32) étant aménagé pour mesurer sans contact la température de chaque pièce moulée (10),
- le convoyeur en continu (31) convoyant les pièces moulées (10) dans un flux de convoyage et étant placé par rapport à chaque caméra (33) numérique et à chaque capteur de rayonnement (32) de telle sorte que chaque pièce moulée (10) dans le flux de convoyage arrive dans la trajectoire du faisceau de chaque caméra numérique (33) et dans la trajectoire du faisceau de chaque capteur de rayonnement (32),
- un système de convoyage (40), aménagé pour transporter les pièces moulées (10) vers le système d'inspection (30) pendant le refroidissement des pièces moulées (10) démoulées de l'outil de moulage (24), le système de convoyage (40) étant aménagé par ailleurs de telle sorte que la durée du transport des pièces moulées (10) démoulées vers le système d'inspection (30) soit au moins en partie de différente longueur,
- un système informatique (50), aménagé pour traiter et pour corriger les caractéristiques géométriques détectées à l'aide d'une fonction d'étalonnage, sous considération des températures mesurées, la fonction d'étalonnage utilisable dans le système informatique (50) décrivant la modification de la caractéristique géométrique en fonction de la température d'une pièce moulée dont la caractéristique géométrique se situe dans une plage de consigne pour les pièces moulées (10) qui doivent être fabriquées.

14. Dispositif selon la revendication 13, **caractérisé en ce que** le convoyeur en continu (31) transporte les pièces moulées (10) dans un flux de convoyage à une rangée.

15. Dispositif selon la revendication 14, **caractérisé en ce que** dans la direction de transport (31.1) du convoyeur en continu (31), en amont de chaque capteur de rayonnement (32) et de chaque caméra (33) numérique est placé un séparateur (34), qui est aménagé pour désolidariser les pièces moulées (10), de telle sorte que toutes les pièces moulées dans le flux de convoyage présentent entre elles un écart concordant.

16. Dispositif selon l'une quelconque des revendications 13 à 15, **caractérisé en ce que** la vitesse du convoyeur en continu (31) est réglable à différentes vitesses.

17. Dispositif selon l'une quelconque des revendications 13 à 16, **caractérisé en ce que** l'au moins un capteur de rayonnement (32) comporte une trajectoire de faisceau, dans la trajectoire de faisceau du capteur de rayonnement est placé un diaphragme réglable en température et le convoyeur en continu (31) est placé par rapport à l'au moins un capteur de rayonnement (32) et au diaphragme de telle sorte que le flux de convoyage des pièces moulées (10) traverse la trajectoire du faisceau entre l'au moins un capteur de rayonnement (32) et le diaphragme.
